# EUROPÄISCHE PATENTSCHRIFT

(11) **EP 2 335 981 B1**
(45) Veröffentlichungstag und Bekanntmachung des Hinweises auf die Patenterteilung: **12.12.2012**
(21) Anmeldenummer: 11161527.4
(22) Anmeldetag: 11.04.2008
(51) Int. Cl.: B60R 16/00, H04L 12/403

(54) **Kommunikationssystem eines landwirtschaftlichen Nutzfahrzeugs**
Communication system for an agricultural vehicle
Système de communication destiné à un véhicule agricole

(30) Priorität: 12.04.2007 DE 102007016804; 22.11.2007 DE 102007056318
(43) Veröffentlichungstag der Anmeldung: 22.06.2011
(62) Teilanmeldung aus: 08736118.4
(73) Patentinhaber: DEERE & COMPANY, Moline, Illinois 61265-8098 (US)
(72) Erfinder: Tarasinski Dr., Nicolai, 67227, Frankenthal (DE); Fritz Dr., Norbert, 68199, Mannheim (DE); Woelk, Daniel, 67227, Frankenthal (DE)
(74) Vertreter: Dehnhardt, Florian Christopher

(56) Entgegenhaltungen:
- EP-A- 1 770 008
- WO-A1-02/45350
- DE-A1- 10 243 319
- DE-A1-102004 054 016
- DAOUD R M ET AL: "Ethernet-Based Car Control Network", ELECTRICAL AND COMPUTER ENGINEERING, CANADIAN CONFERENCE ON, IEEE, PI, 1. Mai 2006 (2006-05-01), Seiten 1031-1034, XP031004645, ISBN: 978-1-4244-0038-6

## Beschreibung

Die Erfindung betrifft ein Kommunikationssystem eines landwirtschaftlichen Nutzfahrzeugs.

Die EP 1 770 008 A1 zeigt ein Steer-by-wire Schiffsteuersystem mit mehreren Steuerständen mit einem Kommunikations-Bus-System, das als Ethernet ausgebildet sein kann.

Die WO 0245350 A1 zeigt ein Bussystem für ein landwirtschaftliches Fahrzeug, das auch dann funktionstüchtig ist, wenn der Stecker eines Gerätes aus der Busleitung ausgesteckt ist.

Seit einigen Jahrzehnten wird auf dem Landmaschinensektor der Einsatz von Elektronik und elektronischen Steuerungen und Regelungen zunehmend wichtiger. Viele Anwendungen lassen sich vereinfachen, effektiver und besser bedienen und nutzen, da elektronische Steuergeräte viele Abläufe präziser und schneller abarbeiten können als es bei einer manuellen Bedienung möglich wäre.

Damit die verschiedenen Steuergeräte ihre Abläufe aufeinander abstimmen, synchronisieren und notwendige Daten untereinender austauschen können, kommunizieren diese über einen CAN-Bus. Dabei handelt es sich um ein serielles Bussystem, das in der Automobil- und Automatisierungsindustrie seit vielen Jahre verbreitet ist. Der CAN-Bus stellt Datenübertragungsraten von bis zu maximal 1 MBit/s unter Idealbedingungen zur Verfügung. Typische Datenübertragungsraten liegen bei 125 kBit/s, 250 kBit/s bzw. 500 kBit/s.

Um die mit dem Funktionsumfang moderner Fahrzeugsysteme zunehmenden Datenmengen übertragen und verarbeiten zu können, werden mehrere Busse oder Bussysteme nebeneinander betrieben, die über Gateways miteinander verbunden sein können. Dadurch entsteht ein immer komplexer werdendes System, das es zunehmend schwieriger werden lässt, Probleme zu erkennen und zu eliminieren.

Ein Anwendungsteilbereich der CAN-Kommunikation in der Landmaschinentechnik stellt die Kommunikation zwischen Traktor und Gerät zum Austausch von Steuerbefehlen dar. Hier existiert ein herstellerübergreifender internationaler Standard (ISO 11783 bzw. ISOBUS), der sicherstellt, dass Geräte und Zugmaschinen unterschiedlicher Hersteller miteinander kommunizieren können und auf welche Art bzw. in welcher Form dies zu geschehen hat.

Der vorliegenden Erfindung liegt daher die Aufgabe zugrunde, ein Kommunikationssystem der eingangs genannten Art anzugeben und weiterzubilden, durch das die vorgenannten Probleme überwunden werden. Insbesondere soll eine vereinfachte Architektur und/oder ein Kommunikationssystem mit einer höheren Bandbreite zur Verfügung gestellt werden.

Diese Aufgabe wird erfindungsgemäß durch die Merkmale des Anspruchs 1 gelöst. Weitere vorteilhafte Ausgestaltungen und Weiterbildungen der Erfindung gehen aus den Unteransprüchen hervor.

Erfindungsgemäß zeichnet sich das Kommunikationssystem der eingangs genannten Art dadurch aus, dass dieses mindestens zwei Hauptbetriebskomponenten und ein ein Ethernet-Datennetz aufweisendes Netzwerk umfasst. Das landwirtschaftliche Nutzfahrzeug und vorzugsweise mindestens eine Arbeitsfunktion ist mit den Hauptbetriebskomponenten betreibbar. Eine Hauptbetriebskomponente weist eine Schnittstelleneinheit und gegebenenfalls eine Steuereinheit auf, über die die Hauptbetriebskomponente ansteuerbar und/oder regelbar ist. Daten bzw. Informationen sind von einer Schnittstelleneinheit einer Hauptbetriebskomponente zu einer Schnittstelleneinheit einer anderen Hauptbetriebskomponente über das Netzwerk übertragbar. Hierbei erstreckt sich das Netzwerk auf ein an das landwirtschaftliche Nutzfahrzeug adaptierbares Arbeitsgerät, das seinerseits eine Hauptbetriebskomponente mit einer Schnittstelleneinheit aufweist.

Falls das landwirtschaftliche Nutzfahrzeug in Form eines Ackerschleppers ausgebildet ist, kommt als Arbeitsgerät beispielsweise ein Pflug, eine Rundballenpresse, eine Spritze, eine Egge, eine Sämaschine und/oder ein Mähwerk in Frage. Dementsprechend ist ein Arbeitsgerät im Sinne der vorliegenden Erfindung insbesondere ein Gerät, das eine Arbeitsfunktion ausführen und das an das landwirtschaftliche Nutzfahrzeug reversibel adaptiert werden kann. Die Netzwerkverbindung zwischen landwirtschaftlichem Nutzfahrzeug und Arbeitsgerät kann über eine Kabelverbindung und/oder über eine Funkverbindung realisiert werden. Eine Hauptbetriebskomponente des Arbeitsgeräts kann beispielsweise ein Elektromotor bzw. ein diesen Elektromotor ansteuernder Umrichter sein, wobei der Elektromotor z.B. eine Mischschnecke eines Futtermischwagens antreiben kann. Der Elektromotor kann über Versorgungsleitungen mit elektrischem Strom versorgt werden, der von einem am landwirtschaftlichen Nutzfahrzeug vorgesehenen elektrischen Generator erzeugt und dem Futtermischwagen zur Verfügung gestellt wird. Der Elektromotor des Futtermischwagens kann in Abhängigkeit der Fahrtgeschwindigkeit, des auszugebenden Futters, des Füllzustands des Behälters des Futtermischwagens und weiterer Betriebsparameter entsprechend angesteuert bzw. geregelt werden. Auch Sensordaten von Sensoren an dem Arbeitsgerät und/oder am landwirtschaftlichen Nutzfahrzeug können über das Netzwerk übertragen werden.

Grundsätzlich kann vorgesehen sein, dass zwischen sämtlichen Hauptbetriebskomponenten ein Ethernet-Datennetz vorgesehen ist. Alternativ kann auch ein Ethernet-Datennetz lediglich zwischen ausgewählten Hauptbetriebskomponenten des landwirtschaftlichen Nutzfahrzeugs vorhanden sein.

Es ist erkannt worden, dass die Kapazität des CAN-Busses, auf dem der bisherige ISO-Standard aufsetzt, bei voller Nutzung der Möglichkeiten des ISOBUS vollständig ausgelastet werden kann. Regelkreise, die über den ISOBUS laufen, übersteigen dessen Leistungsfähigkeit ebenso wie Applikationen zur Automatisierung von Arbeitsabläufen im Zusammenspiel zwischen dem landwirtschaftlichen Nutzfahrzeug und einem daran adaptierbaren Arbeitsgerät. Des Weiteren ist bei einigen Applikationen eine kürzere Reaktionszeit erforderlich, als diese mit dem derzeitigen CAN-Bus realisierbar ist. Zudem weist der CAN-Bus keine garantierten Antwortzeiten auf. Ein weiteres Problem stellt die Reichweite des ISOBUS dar, da die Maße mancher Anbaugeräte größere Dimensionen aufweisen, als es der Bus aus physikalischen Gründen zulässt.

Daher wird insbesondere vorgeschlagen, das aus der industriellen Automatisierung seit wenigen Jahren bekannte Industrial Ethernet-Datennetz, das von Herstellern und Betreibern industrieller Produktionsanlagen eingesetzt bzw. angewendet wird, als Infrastruktur bzw. Plattform für die Kommunikation zwischen den Hauptbetriebskomponenten des landwirtschaftlichen Nutzfahrzeugs einzusetzen.

Aufgrund der höheren Bandbreite (100 MBit/s bzw. 1 GBit/s) und der größeren Reichweite (bis zu 100 m bei Verbindung mittels Kupferkabel) lassen sich auch größere Datenmengen problemlos übertragen. Um komplexe Regelkreise mit Echtzeitanforderungen betreiben zu können, gibt es derzeit mehrere verschiedene Echtzeit-Lösungen auf Basis des Industrial Ethernet-Datennetzes, die den hohen Anforderungen selbst bei kurzen Zykluszeiten (z.B. wenige hundert Mikrosekunden) gerecht werden. Des Weiteren ermöglicht das Industrial Ethernet-Datennetz eine einfachere Anbindung des landwirtschaftlichen Nutzfahrzeugs an die Büro- und Verwaltungswelt. Die Besonderheiten des mobilen Einsatzes stellen erhöhte Anforderungen an das System und somit eine technische Herausforderung vor allem im Offroad-Bereich dar. Zur Realisierung eines echtzeitfähigen Netzwerks kann beispielsweise das Precision Time Protocol (IEEE 1588) verwendet werden.

Als eine Hauptbetriebskomponente im Sinne der vorliegenden Erfindung werden folgende Fahrzeugkomponenten angesehen:
- Verbrennungsmotor
- Getriebe
- Hydraulikpumpe
- Zapfwelle
- Umrichter zur Ansteuerung einer elektrischen Maschine
- Leistungselektronik
- elektrische Maschine
- Generator
- Elektromotor
- Kompressor
- Fahrzeugfederungssystem, insbesondere bei aktiver Ansteuerung

Mit anderen Worten handelt es sich bei einer Hauptbetriebskomponente um ein größeres Aggregat oder eine größere Baugruppe mit einer in der Regel größeren Leistungsaufnahme oder Leistungsabgabe zur Ausführung bzw. Leistung einer wesentlichen Funktion des landwirtschaftlichen Nutzfahrzeugs, wie beispielsweise die Fortbewegung oder das Ausführen einer Arbeitsfunktion.

Gemäß einer bevorzugten Ausführungsform des Kommunikationssystems ist ein Umrichter eines elektrischen Generators über eine Schnittstelleneinheit in das Netzwerk eingebunden. Weiterhin ist ein Umrichter eines elektrischen Motors ebenfalls über eine Schnittstelleneinheit in das Netzwerk eingebunden. Zumindest zwischen den beiden Schnittstelleneinheiten ist das Netzwerk als Ethernet-Datennetz ausgebildet, das insbesondere echtzeitfähig ist, so dass sowohl der Generator als auch der Motor abgestimmt aufeinander betrieben werden können.

In einer weiteren bevorzugten Ausführungsform des Kommunikationssystems ist ein Kommunikationssystemserver vorgesehen, der die einzelnen Schnittstelleneinheiten der Hauptbetriebskomponenten ansteuert. Die Ansteuerung der einzelnen Schnittstelleneinheiten kann zentral mittels des Kommunikationssystemservers erfolgen, wobei daraus nicht notwendigerweise eine sternförmige Netzwerktopologie resultieren muss.

Falls einige der Hauptbetriebskomponenten oder zumindest eine Hauptbetriebskomponente eines Regelkreises angesteuert wird, ist zu erwarten, dass die über das Netzwerk zu übertragende Datenrate in einem Bereich von einem bis mehreren MBit/s liegt. Darüber hinaus können derartige Regelkreise sehr kurze Reaktionszeiten erforderlich machen. Daher ist in einer bevorzugten Ausführungsform des Kommunikationssystems das Ethernet-Datennetz derart ausgebildet, dass damit eine echtzeitfähige Datenübertragung realisierbar ist.

Eine echtzeitfähige Datenübertragung kann insbesondere dann vorliegen, wenn innerhalb einer vorgebbaren Zeitdauer eine Datenübertragung zwischen mindestens zwei Schnittstelleneinheiten erfolgt ist, wobei die vorgebbare Zeitdauer in einem Bereich von 10 µs bis 10 ms liegt.

Eine echtzeitfähige Datenübertragung kann auch im Rahmen einer so genannten deterministischen Datenübertragung realisiert sein. Hierbei erfolgt zu vorgegebenen Zeiten jeweils eine Datenübertragung. Dies kann in Form von einzelnen Datenpaketen vorgesehen sein. Typische Zykluszeiten liegen bei ca. 200 µs, können jedoch durchaus kürzer sein. Innerhalb einer solchen Zykluszeit wird eine Datenübertragung zwischen den Netzteilnehmern abgeschlossen.

Zusätzlich oder alternativ kann eine echtzeitfähige Datenübertragung dann vorliegen, wenn eine Schnittstelleneinheit Daten, die für mindestens eine andere Schnittstelleneinheit bestimmt sind, versendet. Hierbei kann eine maximale Zeitdauer durch die versendende Schnittstelleneinheit vorgebbar sein. Alternativ kann eine maximale Zeitdauer auf sonstige Weise vorgegeben sein. Innerhalb dieser maximalen Zeitdauer muss von der empfangenden Schnittstelleneinheit eine Rückmeldung bzw. Verifikation über eine erfolgreiche Datenübertragung eingegangen sein.

Eine echtzeitfähige Datenübertragung kann auch dann vorliegen, wenn eine Schnittstelleneinheit Daten, die für mindestens eine andere Schnittstelleneinheit bestimmt sind, versendet, und die versendeten Daten bei dem Empfänger auch tatsächlich eingegangen sind, z.B. nach einer Zykluszeit. Derartige Konzepte der echtzeitfähigen Datenübertragung sind aus dem Stand der Technik für stationäre Anwendungen in unterschiedlichen Ausbildungen bekannt. Ein solches Konzept kann entweder für die hier vorliegende Anwendung im Wesentlichen unverändert übernommen oder aber auf den vorliegenden Anwendungsfall eigens angepasst werden.

Gemäß einer bevorzugten Ausführungsform des Kommunikationssystems kann das Netzwerk entsprechend der Spezifikationen der folgenden Ethernet-Standards vollständig oder größtenteils ausgebildet sein:
- IEEE 802.3 (Ethernet)
- IEC SC5C (Real-Time Ethernet)
- IEEE 802.11 (WLAN)
- FlexRay

Insbesondere für den Fall, dass das Ethernet-Datennetz gemäß IEC SC5C (Real-Time Ethernet) ausgebildet ist, kann in vorteilhafter Weise auf einen für sicherheitskritische Anwendungen bereits zertifizierten Standard zurückgegriffen werden. Nun können die Schnittstelleneinheiten als Client und/oder als Server über das Netzwerk miteinander kommunizieren. Zusätzlich oder alternativ kann es zweckmäßig sein, dass das Netzwerk einen Master und mindestens einen Slave aufweist. Der Master kann - insbesondere zu vorgegebenen Zeiten - ein Anforderungsdatenpaket über das Netzwerk an den mindestens einen Slave und/oder an sämtliche Schnittstelleneinheiten verschicken. Insoweit kann auf bekannte bzw. etablierte Konzepte der Datenübertragung im Netzwerk zurückgegriffen werden, je nachdem, welches diese Konzepte für den vorliegenden Anwendungsfall zweckmäßig erscheint.

In diesen Zusammenhang kann auch die Framegröße bzw. die Größe der Datenpakete der über das Netzwerk übertragenen Frames vorgebbar und/oder variabel ausgebildet sein. Bevorzugt kann die Framegröße in Abhängigkeit der zu übertragenden Informationen und/oder in Abhängigkeit der zeitlichen Übertragungsdichte variabel festgelegt werden.

Gemäß einer bevorzugten Ausführungsform des Kommunikationssystems kommunizieren die Schnittstelleneinheiten nach einem Master-Slave-Protokoll über das Netzwerk miteinander. Insbesondere wenn ein Kommunikationssystemserver vorgesehen ist, der die einzelnen Schnittstelleneinheiten der Hauptbetriebskomponenten zentral ansteuert, ist es zweckmäßig, diesen Kommunikationssystemserver als Master und die Schnittstelleneinheiten der Hauptbetriebskomponenten als Slave zu konfigurieren.

Bevorzugt ist das Netzwerk derart ausgebildet, dass dieses eine Datenübertragungsrate von mindestens 1 MBit/s, vorzugsweise von 10 MBit/s und mehr, aufweist.

Die einzelnen Schnittstelleneinheiten können auf unterschiedliche Art im Netzwerk miteinander verbunden werden. Hierbei können unterschiedliche Topologien zweckmäßig sein, wobei im Folgenden davon ausgegangen wird, dass mindestens zwei Schnittstelleneinheiten bzw. drei und mehr Schnittstelleneinheiten zumindest abschnittsweise in der jeweiligen Topologie miteinander verbunden sind. Besonders bevorzugt sind mindestens zwei Schnittstelleneinheiten untereinander in Form einer Linientopologie verbunden. Zusätzlich oder alternativ können mindestens zwei Schnittstelleneinheiten untereinander in Form einer Ringtopologie oder mindestens drei Schnittstelleneinheiten in Form einer Baumtopologie und/oder einer Sterntopologie verbunden sein. Die Ringtopologie ist insbesondere von Vorteil, weil im Falle einer Unterbrechung des Netzwerks an einer Stelle eine Datenübertragung dennoch über den verbliebenen zusammenhängenden Teil möglich ist.

Falls es nicht erforderlich ist, dass sämtliche Hauptbetriebskomponenten bzw. deren Schnittstellen- und/oder Steuereinheiten miteinander in Echtzeit kommunizieren, kann vorgesehen sein, dass lediglich ein Abschnitt des Netzwerks eine echtzeitfähige Datenübertragung aufweist. Weiterhin können die maximalen Datenübertragungsraten einzelner Netzwerkabschnitte unterschiedliche Werte aufweisen, und zwar in Abhängigkeit des zwischen den entsprechenden Schnittstelleneinheiten üblicherweise zu erwartenden Datenverkehrs.

Über das Netzwerk können Gerätedaten übertragen werden, wobei es sich insbesondere um Daten handeln kann, die eine Anmeldung einzelner Schnittstelleneinheiten am Netzwerk betreffen. Weiterhin kommen Daten, die eine Identifikation einer Schnittstelleneinheit oder Kenndaten von Schnittstelleneinheiten bzw. Hauptbetriebskomponenten oder voreingestellte Parameter und/oder Statusdaten dieser Komponenten betreffen, in Betracht.

Über das Netzwerk können alternativ oder zusätzlich Prozessdaten übertragen werden. Prozessdaten können insbesondere Befehlsdaten an eine Hauptbetriebskomponente, Eingangsdaten von einer Hauptbetriebskomponente, Parameter einer Hauptbetriebskomponente und/oder Sensordaten sein. Besonders bevorzugt kann es sich um Regeldaten bezüglich eines elektrischen Leistungsflusses zwischen einem elektrischen Generator und einem Elektromotor handeln, die zwischen dem Umrichter des Generators und dem Umrichter des Elektromotors zu übertragen sind. Hierbei kann sowohl der Generator als auch der Elektromotor an dem landwirtschaftlichen Nutzfahrzeug angeordnet sein. Alternativ oder zusätzlich ist es auch denkbar, dass der Generator am landwirtschaftlichen Nutzfahrzeug und der Elektromotor an einem an das landwirtschaftliche Nutzfahrzeug adaptierbaren Arbeitsgerät angeordnet ist.

Auch Fehlermeldungen können über das Netzwerk übertragbar sein. Diese können insbesondere den Zeitpunkt eines Fehlers, die Fehlerart, den Fehlergrund und/oder den Zustand einer Hauptbetriebskomponente umfassen.

Nicht zuletzt können über das Netzwerk Diagnosedaten übertragen werden, wobei Diagnosedaten insbesondere Betriebszustände und/oder Parameter einer Hauptbetriebskomponente aufweisen. Gemäß einer bevorzugten Ausführungsform des Kommunikationssystems basiert die Schnittstelleneinheit auf einer Single-Chip-Technologie. Hierbei ist insbesondere die Netzwerkkommunikation und die Ansteuerung der Hauptbetriebskomponente in einem Halbleiterbaustein (Chip) zusammengefasst. Dies ermöglicht einerseits eine kompakte Bauweise und andererseits einen weitgehend fehlerfreien und verlässlichen Netzwerkbetrieb, da nur wenige einzelne Komponenten verwendet werden müssen.

Bevorzugt ist eine Schnittstelleneinheit im laufenden Netzwerkbetrieb hinzufügbar oder entfernbar. Eine solche auch mit dem Begriff "Hot Plug" bezeichnete Eigenschaft des Netzwerks ist insbesondere dann zweckmäßig, wenn ein Arbeitsgerät an das landwirtschaftliche Nutzfahrzeug adaptiert wird und das Netzwerk sich auf das Arbeitsgerät erstreckt. In diesem Fall kann sich die Schnittstelleneinheit der Hauptbetriebskomponente des Arbeitsgeräts an dem Fahrzeugnetzwerk im laufenden Netzwerkbetrieb anmelden und im Folgenden über das Netzwerk angesteuert werden. Insbesondere bei landwirtschaftlichen Arbeitsgeräten bzw. Traktoren werden Arbeitsgeräte häufig gewechselt, so dass es nicht erforderlich ist, beispielsweise das Netzwerk herunterzufahren, um eine weitere Schnittstelleneinheit an das Netzwerk anzuschließen und während dieser Zeit nur einen eingeschränkten Funktionsumfang des landwirtschaftlichen Nutzfahrzeugs zur Verfügung zu haben.

Bevorzugt ist mindestens eine Maßnahme vorgesehen, mit der ein unberechtigter Zugriff auf das Netzwerk verhinderbar ist. Eine solche Maßnahme kann eine Firewall, eine Programmroutine, eine Passwortabfrage, eine Benutzerrechteverwaltung und/oder ein kryptologisches Verfahren aufweisen. Diesbezüglich kann auf bestehende Mechanismen bzw. Standards zurückgegriffen werden. Besonders bevorzugt sind Mittel vorgesehen, mit denen die einzelnen Komponenten des Netzwerks auf ein Dateisystem abbildbar sind. Solche Mittel können insbesondere Routinen bzw. Systemkomponenten wie z.B. NFS, FPT, SFTP, RSH, SSH, Telnet, Rlogin und/oder X-Windows umfassen. Somit kann beispielsweise das gesamte Kommunikationssystem nach außen in Form eines einfachen Datei- oder Filesystems repräsentiert sein. Dieses Konzept kann als "Virtueller Server" des landwirtschaftlichen Nutzfahrzeugs bezeichnet werden.

In diesem Zusammenhang kann beispielsweise neue und/oder geänderte Software über den Kommunikationssystemserver zentral eingespielt werden. Gleiches gilt für neue Firmware einzelner Schnittstelleneinheiten bzw. einzelner Hauptbetriebskomponenten. Hierbei ist es nicht erforderlich, den tatsächlichen physikalischen Speicherort der einzelnen Daten bzw. Dateien zu kennen, da letzteres beispielsweise von dem Kommunikationssystemserver koordiniert wird. Eine geeignete Adressierung ist dabei vorauszusetzen.

Weiterhin sind auf diese Weise auch alle Dienste und Funktionen eines Ethernet-Datennetzes grundsätzlich realisierbar bzw. nutzbar. Gerade im Hinblick auf eine Realisierung des Netzwerks für den Offroad-Bereich ist das Ethernet-Datennetz aufgrund seiner Eigenschaft, ein verlässliches und robustes Netzwerk darzustellen, bevorzugt für die vorliegende Anwendung zur Kommunikation einzelner Hauptbetriebskomponenten des landwirtschaftlichen Nutzfahrzeugs über entsprechende Schnittstelleneinheiten geeignet.

Als Betriebssystem für die einzelnen Schnittstelleneinheiten und/oder den Kommunikationssystemserver kann Unix oder ein Unix-Derivat vorgesehen sein. Hierbei handelt es sich um ein multitaskingfähiges Betriebssystem, das auch mit Echtzeitfähigkeiten ausgestattet werden kann. Alternativ kann für die einzelnen Schnittstelleneinheiten und/oder den Kommunikationssystemserver als Betriebssystem Microsoft Windows oder ein entsprechendes Derivat vorgesehen sein.

Unabhängig von dem auf den Netzwerkkomponenten laufenden Betriebssystem kann einem Fahrzeugbediener eine grafische und/oder eine multimediale Benutzerschnittstelle (GUI bzw. Graphical User Interface) zur Verfügung gestellt werden, die einfach und intuitiv zu bedienen ist und dem Bediener die für die Bedienung des landwirtschaftlichen Nutzfahrzeugs erforderlichen Informationen zur Verfügung stellt. Hierbei kann die grafische Benutzerschnittstelle an unterschiedlich ausgebildete, weit verbreitete Bedienschemata "Look & Feel" angepasst sein. Beispiele hierzu sind von den Benutzerschnittstellen der Betriebssysteme von Microsoft Windows oder Apple (Apple-OS) bekannt. Unix-Betriebssysteme und insbesondere Linux stellen als Benutzerschnittstellen Systeme unter der Bezeichnung KDE oder GNOME zur Verfügung. Diese Benutzerschnittstellen können individuell konfiguriert werden, so dass diese z.B. auch ein "Look and Feel" des Betriebssystems Microsoft Windows aufweisen können.

Besonders bevorzugt weist das Kommunikationssystem eine Schnittstelle zu mindestens einem anderen Netzwerk und/oder zu einer branchenspezifischen Software und/oder zu einer Software zum Verwalten industrieller oder landwirtschaftlicher Nutzfahrzeuge auf. Ein solches anderes Netzwerk kann beispielsweise das Basisnetzwerk eines landwirtschaftlichen Betriebes mit einem dort vorgesehenen zentralen Rechnersystem sein. Auf einem solchen Rechnersystem können branchenspezifische Programme installiert sein, die zum Betreiben, zur Verwaltung und/oder zur statistischen Auswertung der Arbeiten des landwirtschaftlichen Betriebes verwendet werden. Insbesondere können durch eine solche Schnittstelle zu einem anderen Netzwerk Office- und Multimedia-Anwendungen in das Netzwerk des landwirtschaftlichen Nutzfahrzeugs integriert werden oder damit kommunizieren bzw. Daten austauschen.

Das andere Netzwerk kann insbesondere eine der folgenden Netzwerkspezifikationen jeweils vollständig oder größtenteils erfüllen:
- IEEE 802.15.1 (Bluetooth)
- IEEE 802.15.4 (ZigBee)
- IEEE 802.1 (WiMax)
- GPS
- USB
- UMTS oder GSM

Im Folgenden sind die Vorteile des erfindungsgemäßen Kommunikationssystems zusammengefasst. So weist das erfindungsgemäße Kommunikationssystem eine schnellere Datenübertragung auf und stellt eine gegenüber dem Stand der Technik - bezogen auf vergleichbare Anwendungsfälle - erhöhte Bandbreite zur Verfügung. Steuer- und Regelprogramme für Steuereinheiten und/oder Schnittstelleneinheiten und/oder Hauptbetriebskomponenten können einfacher und schneller weiterentwickelt werden, da eine einfache, automatisierte und globale Programmierung möglich ist, ohne sich explizit im Falle jeder einzelnen Steuereinheit mit einer unter Umständen speziellen Schnittstelle verbinden zu müssen. Es ist möglich, sich unmittelbar an dem Kommunikationssystemserver einzuloggen und von dort aus auf sämtliche Komponenten zuzugreifen, die über das Netzwerk miteinander verbunden sind.

In diesem Zusammenhang ist es möglich, eine Benutzerrechtevergabe und/oder eine Benutzerrechteverwaltung zu verwenden. Auch hinsichtlich der Diagnosemöglichkeiten können Verbesserungen gegenüber den aus dem Stand der Technik bekannten Systemen erzielt werden, weil eine größere Diagnosedatenrate übertragen werden kann. Das Kommunikationssystem kann aus Bauteilen, Netzwerkprotokollen und Konzepten aufgebaut werden, die für sich gesehen seit längerem bekannt sind und die sich in der Technik bewährt haben. Hierdurch ist insbesondere eine sichere und schnelle Netzwerkkommunikation möglich. Es handelt sich um eine verfügbare Technologie, und Standardkomponenten sind in hohen Stückzahlen bei geringen Materialkosten erhältlich. Es ist möglich, zertifizierte Standards insbesondere für zeitkritische und/oder sicherheitsrelevante Applikationen einzusetzen.

In verfahrensmäßiger Hinsicht wird die eingangs genannte Aufgabe durch die Merkmale des Anspruchs 15 gelöst. Demgemäß dient ein erfindungsgemäßes Verfahren zum Betreiben eines Kommunikationssystems eines landwirtschaftlichen Nutzfahrzeugs.

Das Kommunikationssystem ist insbesondere nach einem der Ansprüche 1 bis 14 ausgebildet.

Das Kommunikationssystem umfasst mindestens zwei Hauptbetriebskomponenten und ein ein Ethernet-Datennetz aufweisendes Netzwerk. Das landwirtschaftliche Nutzfahrzeug wird mit den Hauptbetriebskomponenten betrieben. Eine Hauptbetriebskomponente weist eine Schnittstelleneinheit und gegebenenfalls eine Steuereinheit auf, über die die Hauptbetriebskomponente angesteuert und/oder geregelt wird. Daten werden von einer Schnittstelleneinheit einer Hauptbetriebskomponente zu einer Schnittstelleneinheit einer anderen Hauptbetriebskomponente über das Netzwerk übertragen. Das Netzwerk erstreckt sich hierbei auf ein an das landwirtschaftliche Nutzfahrzeug adaptierbares Arbeitsgerät, wobei das Arbeitsgerät eine Hauptbetriebskomponente mit einer Schnittstelleneinheit aufweist.

Da das erfindungsgemäße Verfahren zum Betreiben eines Kommunikationssystems eines landwirtschaftlichen Nutzfahrzeugs nach einem der Ansprüche 1 bis 14 geeignet ist, erschließen sich einem auf dem vorliegenden Gebiet tätigen Fachmann in Kenntnis des Kommunikationssystems nach einem der Ansprüche 1 bis 14 auch vorteilhafte Ausgestaltungen und Weiterbildungen des erfindungsgemäßen Verfahrens. Insoweit wird zur Vermeidung von Wiederholungen auf den vorangegangenen Teil der Beschreibung verwiesen.

Es gibt nun verschiedene Möglichkeiten, die Lehre der vorliegenden Erfindung in vorteilhafter Weise auszugestalten und weiterzubilden. Dazu wird einerseits auf die Unteransprüche und andererseits auf die nachfolgende Beschreibung der bevorzugten Ausführungsbeispiele der Erfindung anhand der Zeichnungen verwiesen. In den Zeichnungen zeigen:
- Fig. 1: in einer schematischen Darstellung ein erstes Ausführungsbeispiel des erfindungsgemäßen Kommunikationssystems,
- Fig. 2a: eine schematische Darstellung einer ersten Netzwerktopologie,
- Fig. 2b: eine schematische Darstellung einer zweiten Netzwerktopologie,
- Fig. 2c: eine schematische Darstellung einer dritten Netzwerktopologie,
- Fig. 2d: eine schematische Darstellung einer vierten Netzwerktopologie, und
- Fig. 3: in einer schematischen Darstellung ein Ausführungsbeispiel einer möglichen Serverkonfiguration des erfindungsgemäßen Kommunikationssystems.

In den Figuren sind gleiche oder ähnliche Bauteile mit denselben Bezugszeichen gekennzeichnet.

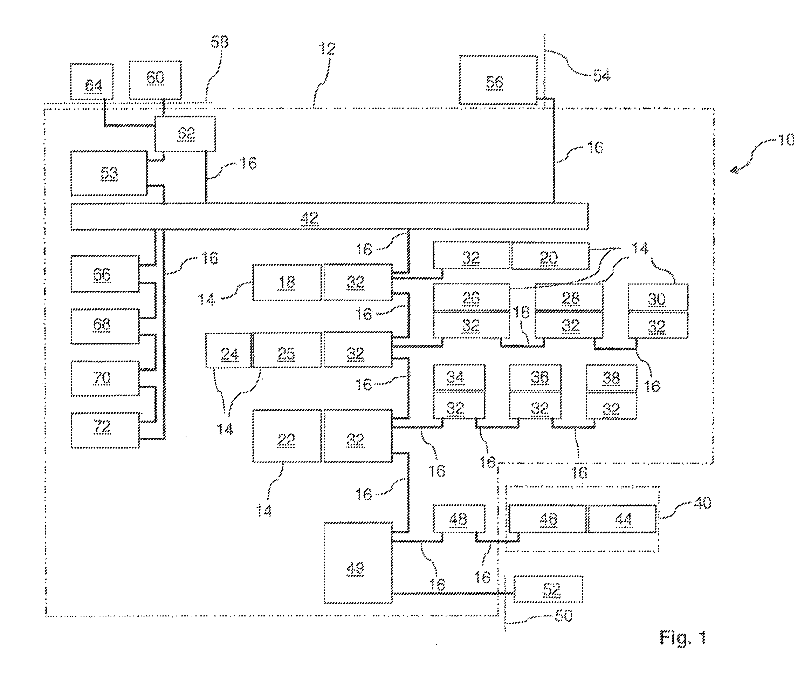

Fig. 1 zeigt ein Kommunikationssystem 10 eines landwirtschaftlichen Nutzfahrzeugs 12. Das landwirtschaftliche Nutzfahrzeug 12 ist in Form eines Traktors ausgebildet. In Fig. 1 ist lediglich mit der gestrichelten Umrandung 12 angedeutet, welche Komponenten dem landwirtschaftlichen Nutzfahrzeug 12 zugeordnet sind. Das Kommunikationssystem 10 umfasst mehrere Hauptbetriebskomponenten 14 und ein Netzwerk 16, das ein Ethernet-Datennetz aufweist. Das landwirtschaftliche Nutzfahrzeug 12 ist mit den Hauptbetriebskomponenten 14 betreibbar.

Als Hauptbetriebskomponenten 14 sind in dem Ausführungsbeispiel gemäß Fig. 1 ein Verbrennungsmotor 18, ein Getriebe 20, eine Hydraulikanlage 22, ein Generator 24 mit einem dem Generator 24 zugeordneten Umrichter 25 und mehrere elektrische Maschinen, die jeweils als Elektromotor oder als Generator betreibbar sind, vorgesehen. Genauer gesagt ist das die elektrische Maschine 26, mit der ein Lüfter (nicht dargestellt) für den Kühler (nicht dargestellt) der Kühlanlage angetrieben wird. Die elektrische Maschine 28 treibt einen Kompressor (nicht dargestellt) einer Klimaanlage an. Der Umrichter 30 stellt über eine elektrische Schnittstelle (nicht dargestellt) einem an das landwirtschaftliche Nutzfahrzeug adaptierten Arbeitsgerät 40 elektrische Energie in der jeweils erforderlichen Form zur Verfügung. Hierbei kann es sich um Gleichstrom oder Wechselstrom oder Drehstrom mit einer vorgebbaren Frequenz handeln. Somit erstreckt sich das Netzwerk 16 auf ein an das landwirtschaftliche Nutzfahrzeug 12 adaptierbares Arbeitsgerät 40, und zwar über eine Kabelverbindung und/oder über eine Funkverbindung. Das Arbeitsgerät 40 weist eine Hauptbetriebskomponente 44 und eine Schnittstelleneinheit 46 auf. Die Schnittstelleneinheit 46 ist im laufenden Netzwerkbetrieb an das Netzwerk 16 hinzufügbar oder entfernbar. Auch das Diagnosesystem 52 ist im laufenden Netzwerkbetrieb an das Netzwerk 16 anschließbar. Mit dem Diagnosesystem 52 können die am Netzwerk 16 angeschlossenen Komponenten diagnostiziert werden.

Die soeben genannten Hauptbetriebskomponenten 14 weisen jeweils eine Schnittstelleneinheit 32 auf, über die die jeweilige Hauptbetriebskomponente 14 ansteuerbar und/oder regelbar ist. Bei dem in Fig. 1 gezeigten Kommunikationssystem 10 sind Daten von einer Schnittstelleneinheit 32 einer Hauptbetriebskomponente 14 zu einer Schnittstelleneinheit 32 einer anderen Hauptbetriebskomponente 14 über das Netzwerk 16 übertragbar. Des Weiteren sind an dem Netzwerk 16 Komponenten angeschlossen, die in diesem Ausführungsbeispiel nicht als Hauptbetriebskomponenten aufgefasst werden, die jedoch wichtige Fahrzeugfunktionen oder Arbeitsfunktionen ansteuern. Im Einzelnen sind das elektromagnetisch ansteuerbare Hydraulikventile 34, einzelne Sensoren 36 sowie einzelne Hydraulikaktuatoren 38. Diese Komponenten sind jeweils einer Schnittstelleneinheit 32 zugeordnet, über die eine Ansteuerung der Komponenten über das Netzwerk 16 erfolgen kann.

Mittels eines Kommunikationssystemservers 42 werden die einzelnen Schnittstelleneinheiten 32 der Hauptbetriebskomponenten 14 angesteuert. Der Kommunikationssystemserver 42 ist - was den Dialog mit dem Netzwerk 16 anbelangt - als Master konfiguriert. Die Schnittstelleneinheiten 32 sind hinsichtlich des Netzwerkbetriebs als Slave konfiguriert. Dementsprechend kommt zwischen dem Kommunikationssystemserver 42 und den Schnittstelleneinheiten 32 ein Master-Slave-Protokoll zur Anwendung.

Zumindest derjenige Teil des Netzwerks 16, der sich zwischen den Schnittstelleneinheiten 32 des Umrichters 25 sowie den elektrischen Maschinen 26, 28 und dem Umrichter 30 erstreckt, ist in Form eines echtzeitfähigen Ethernet-Datennetzes entsprechend der Spezifikationen nach IEC SC5C ausgebildet. Hierdurch kann zwischen diesen Schnittstelleneinheiten 32 und den zugeordneten Hauptbetriebskomponenten 25, 26, 28, 30 eine echtzeitfähige Datenübertragung stattfinden. Das Netzwerk 16 weist eine Datenübertragungrate von 100 MBit/s oder mehr auf. Einem Fahrzeugbediener wird an einer Monitor- und Bedieneinheit 48 eine grafische und multimediale Benutzerschnittstelle zur Verfügung gestellt. Hier kann der Bediener die aktuellen Zustandsdaten des landwirtschaftlichen Nutzfahrzeugs 12 bzw. dessen Hauptbetriebskomponenten 14 ablesen und einzelne Betriebsmodi des landwirtschaftlichen Nutzfahrzeugs 12 aktivieren und/oder deaktivieren. Hierzu ist eine Steuer- und Schnittstelleneinheit 49 vorgesehen, mit der die Bedienerinteraktion zu dem Kommunikationssystemserver 42 des landwirtschaftlichen Nutzfahrzeugs 12 bewerkstelligt wird.

Das Netzwerk 16 weist mehrere Schnittstellen zu anderen Netzwerken auf. So ist eine Schnittstelle 50 vorgesehen, an der ein Diagnosesystem 52 anschließbar ist. Über die Schnittstelle 50 und somit über das Netzwerk 16 sind Diagnosedaten übertragbar, wobei Diagnosedaten insbesondere Betriebszustände und/oder Parameter einer Hauptbetriebskomponente 14 aufweisen. Weiterhin ist eine Schnittstelle 54 vorgesehen, über die das landwirtschaftliche Nutzfahrzeug 12 beispielsweise mit dem Rechnersystem eines Händlers, einer Reparaturwerkstatt und/oder eines Basis-Rechnersystems des Bedieners Verbindung aufnehmen kann. Eine fahrzeugseitige Rechnereinheit, auf der die diesbezüglichen Programmroutinen ablaufen und die fahrzeugspezifischen Daten für die Kommunikation mit dem externen Rechnersystem aufbereitet werden, ist mit dem Bezugszeichen 53 gezeigt. Lediglich schematisch ist mit dem Bezugszeichen 56 ein solches externes Rechner- und/oder Netzwerksystem wiedergegeben. Bei der Schnittstelle 54 kann es sich um eine Kabelverbindung und eine herkömmliche Ethernet-Verbindung handeln (das landwirtschaftliche Nutzfahrzeug wird in der Halle mit einem Netzwerkkabel verbunden). Die Schnittstelle 54 kann jedoch auch als Funkverbindung ausgebildet sein, die entsprechend der Spezifikationen nach IEEE 802.11 (WLAN) oder IEEE 802.16 (WiMax) ausgebildet ist.

Das landwirtschaftliche Nutzfahrzeug 12 weist ein Fahrzeugnavigationssystem 62 auf, das über eine Schnittstelle 58 bzw. eine Funkverbindung von mindestens einem Satelliten 60 GPS-Positionssignale empfangen kann. Über die Schnittstelle 58 kann das Fahrzeugnavigationssystem 62 auch mit einer Basisstation 64 kommunizieren, die ebenfalls ein Positionssignal sendet und an einem Feldrand positioniert werden kann, so dass für das in Form eines Traktors ausgebildete landwirtschaftliche Nutzfahrzeug 12 eine genauere Positionsbestimmung bei der Feldarbeit möglich ist.

Mit den Bezugszeichen 66 bis 72 sind sicherheitsrelevante Steuereinheiten bezeichnet, mit denen das landwirtschaftliche Nutzfahrzeug 12 gelenkt und gebremst werden kann. Der diesbezügliche Abschnitt des Netzwerks 16 ist in einer Ringtopologie mit dem Kommunikationssystemserver 42 über ein echtzeitfähiges Ethernet-Datennetz verbunden, das den Spezifikationen für eine sicherheitskritische Datenübertragung gerecht wird, beispielsweise dem TTP (Time Triggered Protocol) oder FlexRay.

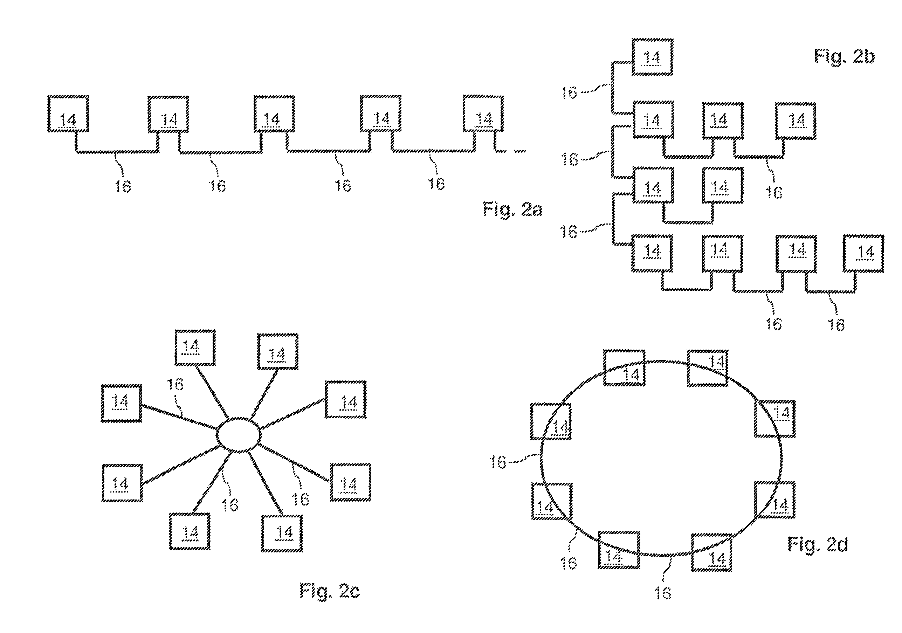

Fig. 2a zeigt in einer schematischen Darstellung mehrere Schnittstelleneinheiten 32 für Hauptbetriebskomponenten (in Fig. 2a bis 2d nicht dargestellt), die miteinander in Form einer Linientopologie verbunden sind. Fig. 2b zeigt in einer schematischen Darstellung mehrere Schnittstelleneinheiten 32 für Hauptbetriebskomponenten, die untereinander in Form einer Baumtopologie verbunden sind. Abschnittsweise sind einzelne Schnittstelleneinheiten 32 in einer Linientopologie miteinander verbunden. Fig. 2c zeigt in einer schematischen Darstellung die Schnittstelleneinheiten 32 für Hauptbetriebskomponenten, die untereinander in Form einer Sterntopologie verbunden sind. Fig. 2d zeigt in einer schematischen Darstellung die Schnittstelleneinheiten 32 für Hauptbetriebskomponenten, die untereinander in Form einer Ringtopologie verbunden sind. Bevorzugt werden für das Kommunikationssystem 10 eines landwirtschaftlichen Nutzfahrzeugs 12 zumindest abschnittsweise die Linien- und/oder die Ringtopologie verwendet. Die Schnittstelleneinheiten 32 der Fig. 1 und Fig. 2a bis 2d basieren auf einer Single-Chip-Technologie.

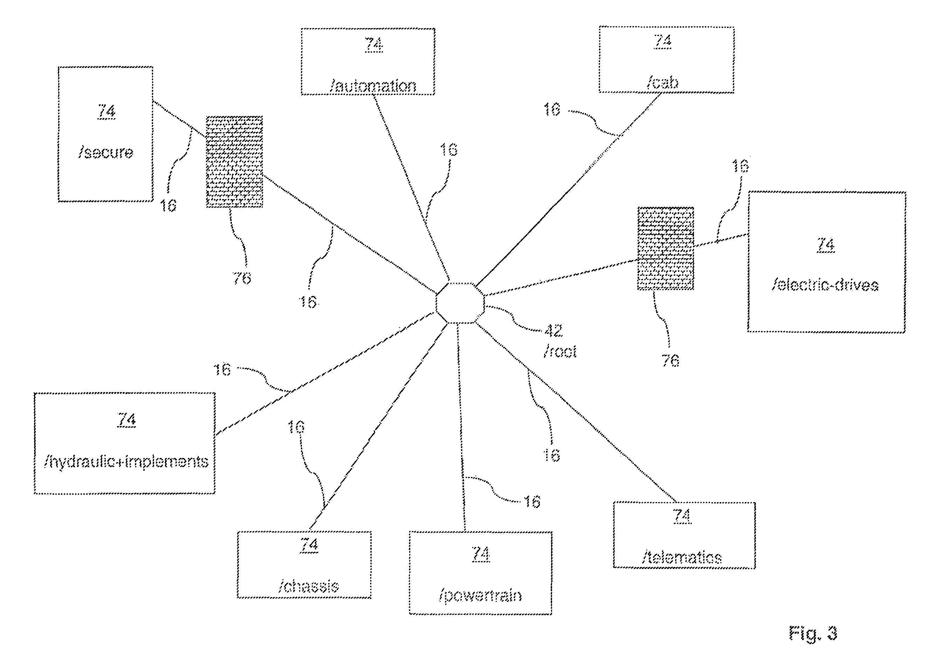

Fig. 3 zeigt in einer schematischen Darstellung ein Ausführungsbeispiel einer Serverkonfiguration, wie sie beispielsweise für das in Fig. 1 gezeigte Kommunikationssystem 10 eingesetzt werden kann. Hierbei sind durch die einzelnen Rechtecke Teile 74 eines Dateisystems dargestellt, in dem die einzelnen relevanten Systemdaten und/oder Programmmodule abgespeichert sind. Die jeweilige Pfadangabe des Dateisystems ist an dem jeweiligen Teil 74 beispielhaft angegeben.

Aufgrund der Ausgestaltung des in Fig. 3 gezeigten Dateisystems ist es in vorteilhafter Weise möglich, neue und/oder geänderte Software über den Kommunikationssystemserver 42 zentral einzuspielen.

Als Betriebssystem für die einzelnen Schnittstelleneinheiten 32 und/oder den Kommunikationssystemserver 42 ist ein Unix-Derivat vorgesehen, nämlich Linux.

Es sind Maßnahmen 76 vorgesehen, mit denen ein unberechtigter Zugriff auf das Netzwerk 16 verhinderbar ist. Diese Maßnahmen 76 sind in Form jeweils einer Firewall ausgebildet.

## Patentansprüche

1. Kommunikationssystem eines landwirtschaftlichen Nutzfahrzeugs, mit mindestens zwei Hauptbetriebskomponenten (14) und einem ein Ethernet-Datennetz aufweisenden Netzwerk (16), wobei das landwirtschaftliche Nutzfahrzeug (12) mit den Hauptbetriebskomponenten (14) betreibbar ist, wobei eine Hauptbetriebskomponente (14) eine Schnittstelleneinheit (32) und gegebenenfalls eine Steuereinheit aufweist, über die die Hauptbetriebskomponente (14) ansteuer - und/oder regelbar ist, wobei Daten von einer Schnittstelleneinheit (32) einer Hauptbetriebskomponente (14) zu einer Schnittstelleneinheit (32) einer anderen Hauptbetriebskomponente (14) über das Netzwerk (16) übertragbar sind,
**dadurch gekennzeichnet, dass** sich das Netzwerk (16) auf ein an das landwirtschaftliche Nutzfahrzeug (12) adaptierbares Arbeitsgerät (40) erstreckt, das seinerseits eine Hauptbetriebskomponente (44) und eine Schnittstelleneinheit (46) aufweist,
wobei eine erste der Hauptbetriebskomponenten (14) als Generator (24) mit einem dem Generator zugeordneten Umrichter (25) ausgebildet ist und dass eine zweite der Hauptbetriebskomponenten (14, 44) als elektrische Maschine (26, 28) mit einem der elektrischen Maschine zugeordneten Umrichter (25, 30) ausgebildet ist, wobei die Umrichter (25, 30) über die jeweilige Schnittstelleneinheit (32, 46) der Hauptbetriebskomponente (14, 44) in das Netzwerk (16) eingebunden sind.

2. Kommunikationssystem nach Anspruch 1, **dadurch gekennzeichnet, dass** eine Hauptbetriebskomponente (14) einen Verbrennungsmotor (18), ein Getriebe (20), eine Hydraulikpumpe, eine Zapfwelle, einen Umrichter (30) zur Ansteuerung einer elektrischen Maschine, eine Leistungselektronik, eine elektrische Maschine, einen Generator (24), einen Elektromotor, einen Kompressor und/oder ein aktiv ansteuerbares Fahrzeugfederungssystem aufweist.

3. Kommunikationssystem nach Anspruch 1 oder 2, **dadurch gekennzeichnet, dass** ein Kommunikationssystemserver (42) vorgesehen ist, der die einzelnen Schnittstelleneinheiten (32) der Hauptbetriebskomponenten (14) ansteuert.

4. Kommunikationssystem nach einem der Ansprüche 1 bis 3,
**dadurch gekennzeichnet, dass** zu vorgegebenen Zeiten jeweils eine Datenübertragung erfolgt, vorzugsweise in Form von einzelnen Datenpaketen.

5. Kommunikationssystem nach einem der Ansprüche 1 bis 4,
**dadurch gekennzeichnet, dass** das Ethernet-Datennetz die Spezifikationen nach IEEE 802.3, IEC SC5C, IEEE 802.11 oder FlexRay vollständig oder größtenteils erfüllt.

6. Kommunikationssystem nach einem der Ansprüche 1 bis 5, **dadurch gekennzeichnet, dass** die Schnittstelleneinheiten (32) als Client und/oder als Server über das Netzwerk (16) miteinander kommunizieren.

7. Kommunikationssystem nach einem der Ansprüche 1 bis 6, **dadurch gekennzeichnet, dass** das Netzwerk einen Master und mindestens einen Slave aufweist, dass der Master ein Anforderungsdatenpaket zu einem vorgebbaren Zeitpunkt über das Netzwerk (16) an den mindestens einen Slave und/oder an sämtliche Schnittstelleneinheiten (32) verschickt.

8. Kommunikationssystem nach einem der Ansprüche 1 bis 7, **dadurch gekennzeichnet, dass** die Schnittstelleneinheiten (32) nach einem Master-Slave-Protokoll über das Netzwerk (16) miteinander kommunizieren.

9. Kommunikationssystem nach einem der Ansprüche 1 bis 8, **dadurch gekennzeichnet, dass** das Netzwerk (16) derart ausgebildet ist, dass dieses eine Datenübertragungsrate von mindestens 10 MBit/s aufweist.

10. Kommunikationssystem nach einem der Ansprüche 1 bis 9, **dadurch gekennzeichnet, dass** mindestens zwei Schnittstelleneinheiten (32) untereinander in Form einer Linientopologie verbunden sind.

11. Kommunikationssystem nach einem der Ansprüche 1 bis 10, **dadurch gekennzeichnet, dass** über das Netzwerk (16) Gerätedaten übertragbar sind, wobei die Gerätedaten insbesondere Daten zur Anmeldung am Netzwerk (16), Identifikation einer Schnittstelleneinheit (32), Kenndaten, voreingestellte Parameter und/oder Statusdaten sind.

12. Kommunikationssystem nach einem der Ansprüche 1 bis 11, **dadurch gekennzeichnet, dass** über das Netzwerk (16) Prozessdaten übertragbar sind, wobei Prozessdaten insbesondere Regeldaten bezüglich des elektrischen Leistungsflusses zwischen elektrischen Maschinen, Befehlsdaten an eine Hauptbetriebskomponente (14), Eingangsdaten von einer Hauptbetriebskomponente (14) und/oder Parameter einer Hauptbetriebskomponente (14) sind.

13. Kommunikationssystem nach einem der Ansprüche 1 bis 12,
**dadurch gekennzeichnet, dass** eine Schnittstelleneinheit (32) im laufenden Netzwerkbetrieb hinzufügbar oder entfernbar ist.

14. Kommunikationssystem nach einem der Ansprüche 1 bis 13,
**dadurch gekennzeichnet, dass** als Betriebssystem für die einzelnen Schnittstelleneinheiten (32) und/oder einen Kommunikationssystemserver (42) Unix oder ein Unix-Derivat oder Microsoft Windows oder ein Microsoft Windows-Derivat vorgesehen ist.

15. Verfahren zum Betreiben eines Kommunikationssystems eines landwirtschaftlichen Nutzfahrzeugs, insbesondere nach einem der Ansprüche 1 bis 14, wobei das Kommunikationssystem (10) mindestens zwei Hauptbetriebskomponenten (14) und ein ein Ethernet-Datennetz aufweisendes Netzwerk (16) umfasst, wobei das landwirtschaftliche Nutzfahrzeug (12) mit den Hauptbetriebskomponenten (14) betrieben wird, wobei eine Hauptbetriebskomponente (14) eine Schnittstelleneinheit (32) und gegebenenfalls eine Steuereinheit aufweist, über die die Hauptbetriebskomponente (14) angesteuert und/oder geregelt wird, wobei Daten von einer Schnittstelleneinheit (32) einer Hauptbetriebskomponente (14) zu einer Schnittstelleneinheit (32) einer anderen Hauptbetriebskomponente (14) über das Netzwerk (16) übertragen werden,
**dadurch gekennzeichnet, dass** sich das Netzwerk (16) auf ein an das landwirtschaftliche Nutzfahrzeug (12) adaptierbares Arbeitsgerät (40) erstreckt, das seiner-seits eine Hauptbetriebskomponente (44) und eine Schnittstelleneinheit (46) aufweist,
wobei eine erste der Hauptbetriebskomponenten (14) als Generator (24) mit einem dem Generator zugeordneten Umrichter (25) ausgebildet ist und dass eine zweite der Hauptbetriebskomponenten (14, 44)
als elektrische Maschine (26, 28) mit einem der elektrischen Maschine zugeordneten Umrichter (25, 30) ausgebildet ist, wobei die Umrichter (25, 30) über die jeweilige Schnittstelleneinheit (32, 46) der Hauptbetriebskomponente (14, 44) in das Netzwerk (16) eingebunden ist.

## Claims

1. Communication system in an agricultural commercial vehicle, having at least two main operating components (14) and a network (16) which has an Ethernet data network, wherein the agricultural commercial vehicle (12) can be operated using the main operating components (14), wherein a main operating component (14) has an interface unit (32) and possibly a control unit which can be used to actuate and/or control the main operating component (14), wherein data can be transmitted from an interface unit (32) of one main operating component (14) to an interface unit (32) of another main operating component (14) via the network (16),
**characterized in that** the network (16) extends to a tool (40) which can be adapted to the agricultural commercial vehicle (12) and which for its part has a main operating component (44) and an interface unit (46),
wherein a first of the main operating components (14) is in the form of a generator (24) having a converter (25) which is associated with the generator and wherein a second of the main operating components (14, 44) is in the form of an electrical machine (26, 28) having a converter (25, 30) which is associated with the electrical machine, the converters (25, 30) being incorporated in the network (16) by means of the respective interface unit (32, 46) of the main operating component (14, 44).

2. Communication system according to Claim 1, **characterized in that** a main operating component (14) has an internal combustion engine (18), a gearbox (20), a hydraulic pump, a power take-off shaft, a converter (30) for actuating an electrical machine, a power electronics unit, an electrical machine, a generator (24), an electric motor, a compressor and/or an actively actuatable vehicle suspension system.

3. Communication system according to Claim 1 or 2, **characterized in that** a communication system server (42) is provided which actuates the individual interface units (32) of the main operating components (14).

4. Communication system according to one of Claims 1 to 3, **characterized in that** respective data transmission takes place at prescribed times, preferably in the form of individual data packets.

5. Communication system according to one of Claims 1 to 4, **characterized in that** the Ethernet data network meets the specifications according to IEEE 802.3, IEC SC5C, IEEE 802.11 or FlexRay fully or for the most part.

6. Communication system according to one of Claims 1 to 5, **characterized in that** the interface units (32) communicate with one another as a client and/or as a server via the network (16).

7. Communication system according to one of Claims 1 to 6, **characterized in that** the network has a master and at least one slave, and **in that** the master sends a request data packet to the at least one slave and/or to all interface units (32) via the network (16) at a prescribable time.

8. Communication system according to one of Claims 1 to 7, **characterized in that** the interface units (32) communicate with one another via the network (16) on the basis of a master/slave protocol.

9. Communication system according to one of Claims 1 to 8, **characterized in that** the network (16) is in a form such that it has a data transmission rate of at least 10 Mbit/s.

10. Communication system according to one of Claims 1 to 9, **characterized in that** at least two interface units (32) are connected to one another in the form of a linear topology.

11. Communication system according to one of Claims 1 to 10, **characterized in that** the network (16) can be used to transmit appliance data, wherein the appliance data are particularly data for registration on the network (16), identification of an interface unit (32), characteristic data, preset parameters and/or status data.

12. Communication system according to one of Claims 1 to 11, **characterized in that** the network (16) can be used to transmit process data, wherein process data are particularly control data for the electrical flow of power between electrical machines, command data for a main operating component (14), input data from a main operating component (14) and/or parameters of a main operating component (14).

13. Communication system according to one of Claims 1 to 12, **characterized in that** an interface unit (32) can be added or removed in the course of network operation.

14. Communication system according to one of Claims 1 to 13, **characterized in that** the operating system provided for the individual interface units (32) and/or a communication system server (42) is Unix or a Unix derivative or Microsoft Windows or a Microsoft Windows derivative.

15. Method for operating a communication system in an agricultural commercial vehicle, particularly according to one of Claims 1 to 14, wherein the communication system (10) comprises at least two main operating components (14) and a network (16) which has an Ethernet data network, wherein the agricultural commercial vehicle (12) is operated using the main operating components (14), wherein a main operating component (14) has an interface unit (32) and possibly a control unit which is used to actuate and/or control the main operating component (14), wherein data are transmitted from an interface unit (32) of one main operating component (14) to an interface unit (32) of another main operating component (14) via the network (16),
**characterized in that** the network (16) extends to a tool (40) which can be adapted to the agricultural commercial vehicle (12) and which for its part has a main operating component (44) and an interface unit (46),
wherein a first of the main operating components (14) is in the form of a generator (24) having a converter (25) associated with the generator and wherein a second of the main operating components (14, 44) is in the form of an electrical machine (26, 28) having a converter (25, 30) associated with the electrical machine, the converters (25, 30) being incorporated in the network (16) by means of the respective interface unit (32, 46) of the main operating component (14, 44).

## Revendications

1. Système de communication d'un véhicule agricole comprenant au moins deux composants principaux de fonctionnement (14) et un réseau comprenant un réseau de données Ethernet (16), dans lequel le véhicule agricole (12) peut être mis en fonctionnement au moyen des deux composants principaux de fonctionnement (14), dans lequel un composant principal de fonctionnement (14) comprend une unité d'interface (32) et le cas échéant une unité de commande au moyen desquelles les composants principaux de fonctionnement (14) peuvent être commandés et/ou régulés, dans lequel des données peuvent être transmises d'une unité d'interface (32) d'un composant principal de fonctionnement (14) à une unité d'interface (32) d'un autre composant principal de fonctionnement (14) par l'intermédiaire du réseau (16), **caractérisé en ce que** le réseau (16) s'étend sur un outillage (40) pouvant être adapté à un véhicule agricole (12), lequel outillage comprend quant à lui un composant principal de fonctionnement (44) et une unité d'interface (46),
dans lequel un premier des composants principaux de fonctionnement (14) est conçu sous la forme d'un générateur (24) comprenant un convertisseur (25) associé au générateur et **en ce qu'**un second des composants principaux de fonctionnement (14, 44) est réalisé sous la forme d'une machine électrique (26, 28) comprenant un convertisseur (25, 30) associé au générateur, dans lequel les convertisseurs (25, 30) sont connectés sur le réseau (16) par l'intermédiaire de l'unité d'interface (32, 46) respective du composant principal de fonctionnement (14, 44).

2. Système de communication selon la revendication 1, **caractérisé en ce qu'**un composant principal de fonctionnement (14) comprend un moteur à combustion interne (18), une transmission (20), une pompe hydraulique, un arbre de prise de force, un convertisseur (30) destiné à commander une machine électrique, une électronique de puissance, une machine électrique, un générateur (24), un moteur électrique, un compresseur et/ou un système de suspension active de véhicule pouvant être commandé.

3. Système de communication selon la revendication 1 ou 2, **caractérisé en ce qu'**il est prévu un serveur de système de communication (42) qui commande les unités d'interface individuelles (32) des composants principaux de fonctionnement (14).

4. Système de communication selon l'une quelconque des revendications 1 à 3, **caractérisé en ce qu'**à des instants prédéterminés il se produit une transmission de données respective, de préférence sous la forme de paquets de données individuels.

5. Système de communication selon l'une quelconque des revendications 1 à 4, **caractérisé en ce que** le réseau de données Ethernet respecte entièrement ou en grande partie les spécifications des normes IEEE 802.3, IEC SC5C, IEEE 802.11 ou FlexRay.

6. Système de communication selon l'une quelconque des revendications 1 à 5, **caractérisé en ce que** les unités d'interface (32) communiquent les unes avec les autres en tant que client et/ou en tant que serveur par l'intermédiaire du réseau (16).

7. Système de communication selon l'une quelconque des revendications 1 à 6, **caractérisé en ce que** le réseau comprend un maître et au moins un esclave, **en ce que** le maître envoie un paquet de requête en un point prédéterminé dans le temps par l'intermédiaire du réseau (16) à l'au moins un esclave et/ou à l'ensemble des unités d'interface (32).

8. Système de communication selon l'une quelconque des revendications 1 à 7, **caractérisé en ce que** les unités d'interface (32) communiquent les unes avec les autres conformément à un protocole du type maître-esclave par l'intermédiaire du réseau (16).

9. Système de communication selon l'une quelconque des revendications 1 à 8, **caractérisé en ce que** le réseau (16) est conçu de manière à présenter un débit de transmission de données d'au moins 10 Mbits/s.

10. Système de communication selon l'une quelconque des revendications 1 à 9, **caractérisé en ce qu'**au moins deux unités d'interface (32) sont interconnectées sous la forme d'une topologie linéaire.

11. Système de communication selon l'une quelconque des revendications 1 à 10, **caractérisé en ce que** des données de dispositifs peuvent être transmises par l'intermédiaire du réseau (16), dans lequel les données de dispositifs sont notamment des données de notification au réseau (16), l'identification d'une unité d'interface (32), des données caractéristiques, des paramètres préréglés et/ou des données d'état.

12. Système de communication selon l'une quelconque des revendications 1 à 11, **caractérisé en ce que** des données de processus peuvent être transmises par l'intermédiaire du réseau (16), dans lequel les données de processus sont notamment des données de commande concernant plus particulièrement le flux de puissance électrique entre des machines électriques, des données d'ordres fournies à un composant principal de fonctionnement (14), des données d'entrée d'un composant principal de fonctionnement (14) et/ou des paramètres d'un composant principal de fonctionnement (14).

13. Système de communication selon l'une quelconque des revendications 1 à 12, **caractérisé en ce qu'**une unité d'interface (32) peut être ajoutée ou retirée pendant le fonctionnement du réseau.

14. Système de communication selon l'une quelconque des revendications 1 à 13, **caractérisé en ce qu'**en tant que système d'exploitation destiné à des unités d'interface individuelles (32) et/ou à un serveur de système de communication (42), on utilise Unix ou un dérivé d'Unix ou Microsoft Windows ou un dérivé de Microsoft Windows.

15. Procédé destiné à mettre en fonctionnement un système de communication d'un véhicule agricole, notamment selon l'une quelconque des revendications 1 à 14, dans lequel le système de communication (10) comprend au moins deux composants principaux de fonctionnement (14) et un réseau comprenant un réseau de données Ethernet (16), dans lequel le véhicule agricole (12) est mis en fonctionnement au moyen des deux composants principaux de fonctionnement (14), dans lequel un composant principal de fonctionnement (14) comprend une unité d'interface (32) et le cas échéant une unité de commande au moyen desquelles le composant principal de fonctionnement (14) est commandé et/ou régulé, dans lequel des données sont transmises d'une unité d'interface (32) d'un composant principal de fonctionnement (14) à une unité d'interface (32) d'un autre composant principal de fonctionnement (14) par l'intermédiaire du réseau (16),
**caractérisé en ce que** le réseau (16) s'étend sur un outillage (40) pouvant être adapté au véhicule agricole (12), lequel outillage comprend quant à lui un composant principal de fonctionnement (44) et une unité d'interface (46),
dans lequel un premier des composants principaux de fonctionnement (14) est réalisé sous la forme d'un générateur (24) et d'un convertisseur (25) associé au générateur et **en ce qu'**un second des composants principaux de fonctionnement (14, 44) est réalisé sous la forme d'une machine électrique (26, 28) comprenant un convertisseur (25, 30) associé au générateur, dans lequel le convertisseur (25, 30) est connecté sur le réseau (16) par l'intermédiaire de l'unité d'interface (32, 46) respective du composant principal de fonctionnement (14, 44).
